# EUROPÄISCHE PATENTSCHRIFT

(11) **EP 1 042 823 B1**
(45) Veröffentlichungstag und Bekanntmachung des Hinweises auf die Patenterteilung: **25.08.2004**
(21) Anmeldenummer: 99953810.1
(22) Anmeldetag: 13.10.1999
(51) Int. Cl.: H01L 41/09

(54) **ANORDNUNG ZUM POSITIONIEREN EINES OBJEKTES**
DEVICE FOR POSITIONING AN OBJECT
DISPOSITIF POUR LE POSITIONNEMENT D'UN OBJET

(30) Priorität: 17.10.1998 DE 19847995
(43) Veröffentlichungstag der Anmeldung: 11.10.2000
(73) Patentinhaber: CARL ZEISS JENA GmbH, D-07745 Jena (DE)
(72) Erfinder: BARTZKE, Karlheinz, D-07747 Jena (DE); HARTMANN, Thomas, D-07749 Jena (DE); MASCHKE, Gunter, D-07743 Jena (DE); STEINER, Reinhardt, D-04676 Stadtroda (DE); MACK, Stefan, D-07745 Jena (DE)
(74) Vertreter: Geyer, Werner, Dr.-Ing.
(86) Internationale Anmeldenummer: PCT/EP1999/007700
(87) Internationale Veröffentlichungsnummer: WO 2000/024065

(56) Entgegenhaltungen:
- EP-A- 0 823 738

## Beschreibung

Die Erfindung bezieht sich auf eine Anordnung zum Positionieren eines auf einer Untertage verschiebbaren Objektes relativ zu dieser mittels eines mit einer Ansteuereinheit ansteuerbaren Piezoelementes.

Solche Positioniersysteme werden zum Beispiel in der Mikroskopie o.ä. eingesetzt, wo es z. B. beim Verstellen von Blenden um Stellwege im Millimeterbereich geht.

Aus dem Stand der Technik sind eine Vielzahl von pneumatischen, hydraulischen, elektromotorisch angetriebenen, piezoelektrischen, elektrostatischen o. ä. Positioniersystemen bekannt. Aufgrund der Forderung, z. B. in der Mikroskopie, im Millimeterbereich liegende Stellwege und eine relativ hohe Auflösung zu halten, haben sich eine Reihe von Positioniersysteme als besonders günstig herausgestellt. Diese Positioniersysteme nutzen dabei elektro-magneto-mechanische und elektrodynamische Kraftwirkungen aus, wie sie bei klassischen Linear- oder rotatorischen Motoren zum Einsatz kommen.

So ist aus MMS'95 "The Electrostatic Shuffle Motor" ein Positioniersystem bekannt geworden, bei dem der elektrostatische Mikroaktor aus Silizium besteht. Hierbei wirken auf die freitragenden elastischen Strukturen elektrostatische Kräfte, die zu einer Linearverstellung führen. Nachteilig ist, daß solche Positioniersysteme nur geringe Stellkräfte erzeugen und für Verstellbereiche unter 1 mm verwendet werden können. Des weiteren führen Spannungsabschaltungen zu einer Veränderung der eingestellten Position.

Es ist weiterhin bekannt, Mikromanipulatoren zur Mikrobewegung von Objekten (DE-C-36 10 540) zu verwenden. Die Mikrobewegung wird dort durch aus piezoelektrischem Material bestehende Hohlzylinder realisiert, die beim Anlegen von Spannung verbogen werden und somit eine schrittweise Verschiebung des auf den Hohlzylinder aufliegenden Objektes ermöglichen. Diese Bewegungen sind nicht reproduzierbar und damit für bestimmte Anwendungen, z. B. in der Mikroskopie, nicht anwendbar. Darüber hinaus werden auch mit dieser Anordnung nur relativ geringe Stellwege erreicht.

In der DE-C- 40 23 311 ist eine Verstellvorrichtung für Mikrobewegungen beschrieben, die einen den Schereffekt nutzenden Piezowandler aufweist. Hierbei sind ein Antriebselement und ein Anlageelement in Gestalt und Anordnung zur gegenseitigen Lagerung und zur Ausführung einer geführten Mikrobewegung so ausgebildet, daß das zum Scheren befestigte Antriebselement die Bewegung des Anlageelementes auch in Bewegungsrichtung ermöglicht.

Bei dieser Verstelleinrichtung besteht das Trägerelement aus einer Grundplatte und einem Trägerarm, die mit Betriebselementen versehen sind. Die Antriebselemente weisen Auflagen auf, die Kugelsitze mit Kugeln enthalten. Auf diesen Kugeln liegt das bewegliche Objekt auf, das mittels der zum Scheren befähigten Piezoelemente, die die Auflage für die Kugelsitze darstellen, verschoben werden können. Nachteilig bei dieser Anordnung ist, daß durch die Gleitreibung an den Kugelelementen Abrieb entsteht und damit die Funktionsfähigkeit beeinträchtigt wird. Darüber hinaus ist die erzielbare Verstellgeschwindigkeit des Objektes relativ gering.

In der EP 0823738A ist eine Positioniereinheit offenbart, bei der eine auf einer Grundplatte beweglich gelagerte Trägerplatte mittels eines piezoelektrischen Aktors nach dem Trägheitsprinzip positioniert wird.

Ausgehend vom aufgezeigten Stand der Technik liegt der Erfindung die Aufgabe zugrunde, eine Anordnung zum Positionieren eines auf einer Unterlage verschiebbaren Objektes zu realisieren, die große Stellwege in kurzer Zeit ermöglicht, eine hohe Positioniergenauigkeit aufweist, relativ klein ist, kostengünstig produziert werden kann und bei Spannungsabschaltung keine Positionsänderung erfährt.

Diese Aufgabe wird erfindungsgemäß bei einer Anordnung der einleitend genannten Art durch die kennzeichnenden Merkmale des Anspruchs 1 gelöst. Das Verschieben zwischen dem Objekt und der Unterlage erfolgt durch hammerartige Schläge eines Piezoelementes auf eine Anschlagfläche eines Anschlagblockes . Das die hammerartigen Schläge ausführende Piezoelement und der Anschlagblock sind mit dem gegenüber der Unterlage verschiebbaren Objekt verbunden, wobei das Piezoelement in einem vorgegebenen Abstand zur Anschlagfläche angeordnet ist. Die hammerartigen Schläge werden durch das Anlegen einer definierten elektrischen Spannung an die elektrischen Kontakte des Piezoelementes und ein damit verbundenes Verbiegen des Piezoelementes hervorgerufen. Eine Andruckkraft zwischen Objekt und Unterlage zur Ausführung reibkraftbegrenzter Stellschritte wird mittels eines am Objekt vorgesehenen Federelementes erzeugt.

Gemäß einer bevorzugten Ausbildung der Erfindung besteht das Piezoelement aus mindestens zwei Schichten von Piezomaterialien, z. B. Piezofolien bzw. einzelnen Piezoelementen. Das Piezoelement kann dabei als Unimorph, Bimorph oder Multimorph aufgebaut sein.

Bei einer vorteilhaften Weiterbildung der Erfindung ist die Anschlagfläche an einem am Objekt ausgebildeten oder getrennt von diesem vorgesehen, jedoch mit diesem verbundenen Anschlagblock angebracht. Es ist vorteilhaft, daß auch auf der der Anschlagfläche gegenüberliegenden Seite ein zweiter mit dem Objekt verbundener Anschlagblock mit einer Anschlagfläche vorgesehen ist. Damit wird eine Verschiebung des Objektes in beide Richtungen der x-Ebene ermöglicht. Gemäß einer bevorzugten Ausbildung der Erfindung sind an dem Objekt an der der Unterlage zugewandten Fläche oder/und der dem Objekt zugewandten Fläche der Unterlage Gitterstruksturen angebracht bzw. aufgebracht bzw. eingelassen.

Weitere bevorzugte Fortbildungen der Erfindung sind in den Unteransprüchen beschrieben.

Bevorzugt kann auch das sich bewegende Objekt in einer Führung angebracht und durch ein integriertes elastisches Federelement mit einer relativ konstanten Federkraft in der Führung einseitig angedrückt werden.

Die gegenüber dem Eigengewicht des verschiebbaren Objektes um ein Vielfaches größere Reibkraft bewirkt, daß auch bei einer senkrechten Anordnung der Positionieranordnung sowohl auf- als auch absteigend gleich große Stellschritte erzielt werden und bei Spannungsabschaltung keine Positionsänderung eintritt. Kostengünstige Lichtschranken-, Hallsonden- oder andere, z. B. inkrementelle, Wegmeßsysteme ermöglichen die Steuerung des verschiebbaren Objektes mit einer Auflösung von z. B. 1 µm. Auf dem verschiebbaren Objekt und der Unterlage aufgebrachte Gitterstrukturen, z. B. Riefen mit 1 µm Gitterkonstante, ermöglichen durch den zwischen den Gittern wirkenden Rastmechanismus eine besonders einfache Positionierung des Objekts ohne Wegmeßsystem, indem der bei jedem mechanischen Impuls des Stößels auftretende Stellschritt des Objekts durch die Rastung auf z. B. 1 µm genau begrenzt wird. Die Positionierung erfolgt dann durch besonders einfache Zählung und Auswertung der Impulse.

Die flach gestaltbaren Elemente der Anordnung können durch Ätzen oder Laserschneiden aus Federstahl, Federbronze, Aluminium oder anderen Materialien produktiv auch bei niedrigen Stückzahlen hergestellt werden.

Die Erfindung soll nachstehend anhand von Prinzipdarstellungen noch näher erläutert werden.

Es zeigen:
- Fig. 1: die Prinzipdarstellung einer erfindungsgemäßen Positionieranordnung mit piezoelektrisch angetriebenem Stößel und mit einer Gitterstruktur;
- Fig. 2: eine Prinzipdarstellung einer höhenmodulierten Gitterstruktur;
- Fig. 3: eine Prinzipdarstellung einer magnetischen Gitterstruktur;
- Fig. 4: eine Prinzipdarstellung einer elektrostatischen Gitterstruktur;
- Fig. 5: eine Prinzipdarstellung einer hydrophob/hydrophilen Gitterstruktur;
- Fig. 6: eine Ausführungsform der erfindungsgemäßen Positionieranordnung mit einem Reflexionslichtschrankenwegmeßsystem;
- Fig. 7: eine Ausführungsform für einen Multimorph für eine erfindungsgemäße Positionieranordnung;
- Fig. 8: Spannungsimpulsformen zur Ansteuerungen des piezoelektrischen Stößels und
- Fig. 9 und 10: Ausführungsformen magnetischer Positionierungsgitter.

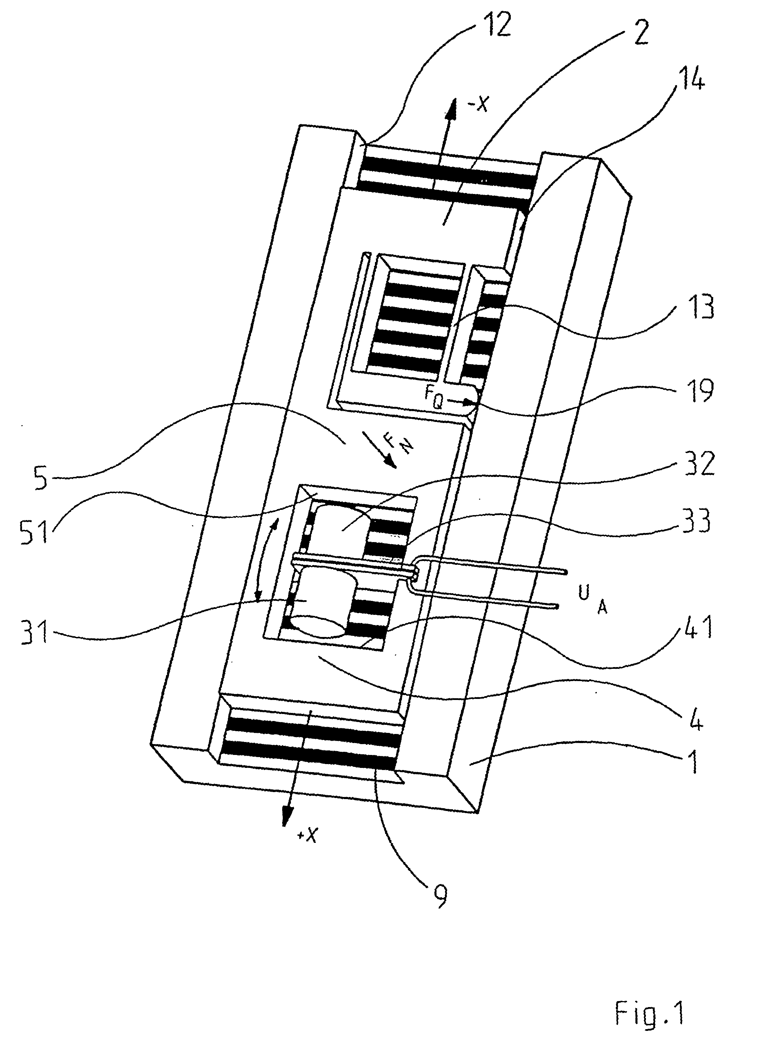

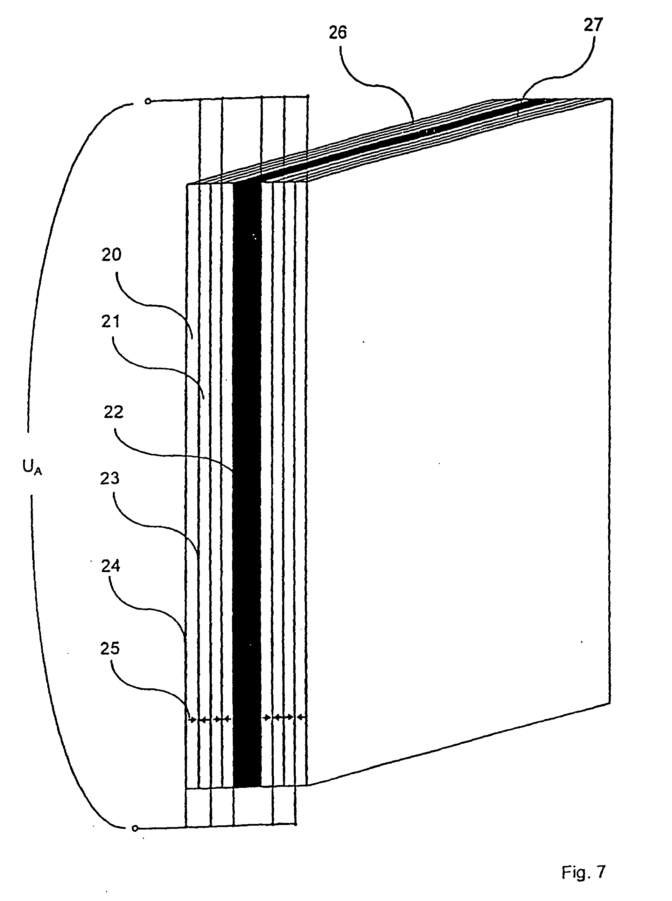

Die Figur 1 zeigt eine Prinzipdarstellung einer erfindungsgemäßen Positionieranordnung. Ein Piezoelement 3 besteht aus einem piezoelektrischen Element 33 und zwei mit diesem verbundenen massenbehafteten Stößel 31 und 32. Das piezoelektrische Element 33 ist als piezoelektrischer Bieger, als sogenannter Bimorph, ausgebildet, könnte aber auch als Unimorph oder Multimorph (siehe Fig. 7) ausgebildet sein.

Das Piezoelement 3 ist zwischen zwei Anschlagflächen 41 und 51 angeordnet und mit einem Objekt 2, das in x-Richtung auf einer Unterlage 1 beweglich angeordnet ist, verbunden. Die Bewegung des Objektes 2 wird durch eine Führungsschiene 12 der Unterlage 1 in Verbindung mit einer Schiene 14 des Objektes 2 realisiert. Eine an dem Bimorph 33 anliegende Spannung U_{A}, ausgebildet als definierter positiver oder negativer Spannungsimpuls, führt mit definiertem zeitlichen Verlauf zu einer beschleunigten Verbiegung des Bimorphs 33. Die Stößel 31 und 32 schlagen hierdurch gegen die Anschlagflächen 41 oder 51 an Anschlagblöcken 4 bzw. 5 und übertragen einen großen Teil ihres mechanischen Impulses auf das Objekt 2. In der gezeigten Darstellung besteht das Objekt 2 mit den Anschlagblöcken 4, 5 und den dazugehörigen Anschlagflächen 41 und 51 aus einem Teil. Bei einer anderen (nicht dargestellten) Ausführung können das Objekt 2 und die Anschlagblöcke 4, 5 mit den dazugehörigen Anschlagflächen 41 und 51 auch aus getrennten Teilen bestehen, die mittels üblicher mechanischer Verbindungstechniken, wie z. B. Schrauben, Nieten usw., miteinander verbunden sind.

Durch die hammerartigen Schläge der Stößel 31 und 32 vollführt das Objekt 2 einen reibkraftbegrenzten Stellschritt. Die Reibkraft wird durch ein im Objekt 2 integriertes Federelement 13 mit einem Federanschlag 19 erzeugt, das durch seine Elastizität mit der Federkraft F über das Objekt 2 auf die Unterlage 1 einwirkt. Das Federelement 13 gleitet in entsprechend ausgebildeten Nuten bzw. Schwalbenschwanzsystemen, die der Einfachheit halber in den Figuren nicht dargestellt sind. Die zwischen dem Objekt 2 und der Unterlage 1 entstehende, relativ konstante Reibkraft, die z. B. das 20-fache des Eigengewichtes des Objektes 2 beträgt, bewirkt konstante Stellschritte auch in senkrechter Einbaulage, selbst bei geringen Oberflächenunebenheiten, und verhindert Positionsänderungen des Objektes 2 bei einer Spannungsabschaltung. Durch periodische Wiederholung der Spannungsimpulse U_{A} wird das Objekt 2 schrittweise in eine Richtung getrieben. Eine Invertierung der Spannengsimpulse U_{A} bewirkt Schläge der Stößel 31, 32 in entgegengesetzter Richtung und damit eine Richtungsumkehr der translatorischen Bewegung längs der dargestellten x-Achse.

Bei einem Aufbau des Bimorphs 33 von 20 x 5 x 1 mm³ Größe weisen die beiden piezoelektrischen Elemente 33 (Folien) Dicken von ca. 0,5 mm auf. Zur Erzeugung von z. B. 1 Mikrometer großen Stellschritten wird der Bimorph mit Spannungsimpulsen U_{A} von ca. 100 V betrieben. Bei Verwendung eines Multimorphs als piezoelektrischer Bieger sind Spannungsimpulse U_{A} von nur 20 V erforderlich.

In Verbindung mit der zwischen dem Objekt 2 und der Unterlage 1 wirkenden Normal-Kraft F_{N} können, wie ebenfalls in Figur 1 dargestellt, auf den einander zugewandten Seiten des Objektes 2 und der Unterlage 1 körperliche oder magnetische o. ä. Gitterstrukturen 9 aufgebracht sein. Der Bimorph 33 ist vorteilhafterweise so zwischen den Anschlagflächen 41 und 51 angeordnet. daß der Abstand der Enden der Stößel 31 und 32 zu den zugeordneten Anschlagflächen 41 und 51 in Ruhestellung, d.h. ohne angelegte Spannung, etwa gleich groß ist. Bei einer Länge des Bimorphs 33 von z. B. 20 mm sollte der Bewegungsraum zwischen den Stößeln 31 und 32 und den Anschlagflächen 41 und 51 jeweils ca. 0,2 mm betragen.

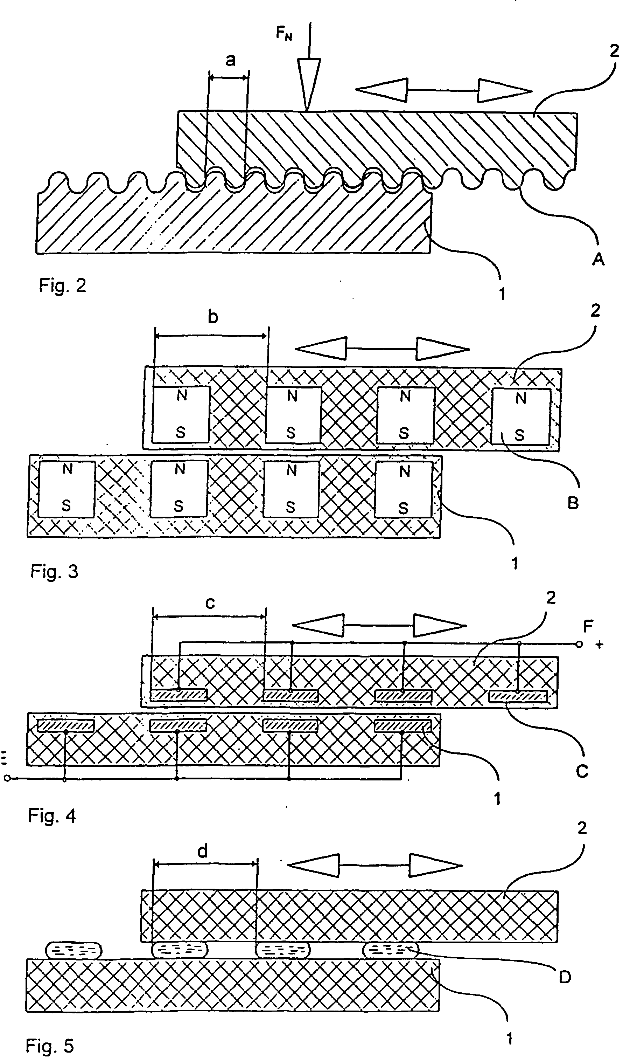

Die Figuren 2 bis 5 zeigen einen Schnitt durch die zwischen dem Objekt 2 und der Unterlage 1 angeordneten Gitterstrukturen 9. Figur 2 zeigt dabei einen Schnitt bei Verwendung einer höhenmodulierten Gitterstruktur, z. B. in Form von Riefen (A). Die höhenmodulierte Gitterstruktur mit einer Gitterkonstanten a ist sowohl auf dem Objekt 2 (z. B. Translator) als auch auf der Unterlage 1 (z. B. Stator), wie in Figur 1 beschrieben, aufgebracht.

Figur 3 zeigt den Aufbau einer Gitterstruktur 9 als magnetische Gitterstruktur. Hierbei ist zwischen dem Objekt 2 und der Unterlage 1 eine magnetische Gitterstruktur B angeordnet. Diese wird durch in der Elektrotechnik allgemein übliche Beschichtungs- bzw. Bedampfungsverfahren oder durch Einzelmagnete oder durch die Strukturierung der Oberfläche eines Dauermagneten oder einer weichmagnetischen Schicht auf einem Dauermagneten hergestellt. Das Objekt 2 und die Unterlage 1 liegen entweder kraftschlüssig aufeinander oder weisen durch Öl- oder Luftlagerung einen Abstand von ca. 1 µm voneinander auf oder sind durch Gleitschichten getrennt. Die magnetischen Gitterstrukturen auf dem Objekt 2 und der Unterlage 1 sind so angeordnet, daß sich entweder gleichnamige oder ungleichnamige Pole gegenüberstehen. Üblicherweise kommen Magnetinduktionen im Bereich von 0,1 - 1 Tesla zur Anwendung. Die entsprechend der Gitterkonstante b periodischen Magnetkräfte zwischen dem Objekt 2 und der Unterlage 1 bewirken periodische Normalkräfte F_{N} und periodische Tangentialkräfte F_{X}, deren Größe von dem Abstand und der Magnetinduktion der magnetischen Strukturen abhängt. Die Gitterkonstante der magnetischen Gitterstruktur b weist dabei Abmessungen im Bereich von ca. 1 µm auf. Die Gitterkonstanten b der Gitterstrukturen 9 sollen gleich sein.

In Figur 4 sind die Gitterstrukturen 9 als elektrostatische Gitterstruktur dargestellt. Die Gitterkonstante der elektrostatischen Struktur mit der Gitterkonstanten c beträgt ca. 1 µm. In Abhängigkeit von dem Aufbau des Gesamtsystems und der Anzahl der Gitterelemente der Gitterstruktur soll an den elektrischen Polen E und F der Gitterstruktur eine Spannung im Bereich von 1 - 10 Volt anliegen. Zwischen dem Objekt 2 und der Unterlage 1 muß sich mindestens eine dielektrische Schicht befinden. Die dielektrische Schicht zwischen dem Objekt 2 und der Unterlage 1 bewirkt eine Erhöhung der elektrostatischen Kräfte zwischen dem Objekt 2 und der Unterlage 1.

Die Dielektrizitätskonstante εᵣ soll hierbei im Bereich von 1 bis 10.000 liegen. In Abhängigkeit von der elektrischen Spannung, der Dielektrizitätskonstanten εᵣ der dielektrischen Schicht, dem Abstand der elektrostatischen Gitterstrukturen und der Relativposition der Gitter in x-Richtung wirken zwischen dem Objekt 2 und der Unterlage 1 Normalkräfte F_{N} und periodische Tangentialkräfte F_{X}.

In Fig. 5 weisen die Gitterstrukturen 9 benetzende und nicht benetzende Oberflächeneigenschaften auf, z. B. hydrophil und hydrophob. Bei Verwendung von Silizium als Substrat werden hydrophile Oberflächeneigenschaften, z. B. durch Behandlung mit oxidierender Salpetersäure oder Wasserstoffperoxid, und hydrophobe Oberflächeneigenschaften durch Behandlung mit Flußsäure oder Hexamethyldisilazan erzielt. Zwischen dem Objekt 2 und der Unterlage 1 befindet sich eine gitterförmige Flüssigkeitsschicht, z. B. Wasser oder Glyzerin. Bei einer Relativbewegung in x-Richtung zwischen dem Objekt 2 und der Unterlage 1 entstehen durch diese Anordnung periodische Normalkräfte F_{N} und periodische Tangentialkräfte F_{X}, die aufgrund der unterschiedlichen Oberflächenenergien zwischen der gitterförmigen Flüssigkeitsschicht und den benetzenden und nichtbenetzenden Oberflächengittem 10⁴ bis 10⁵ N/m2 bei Strukturbreiten von d = 1 µm betragen können.

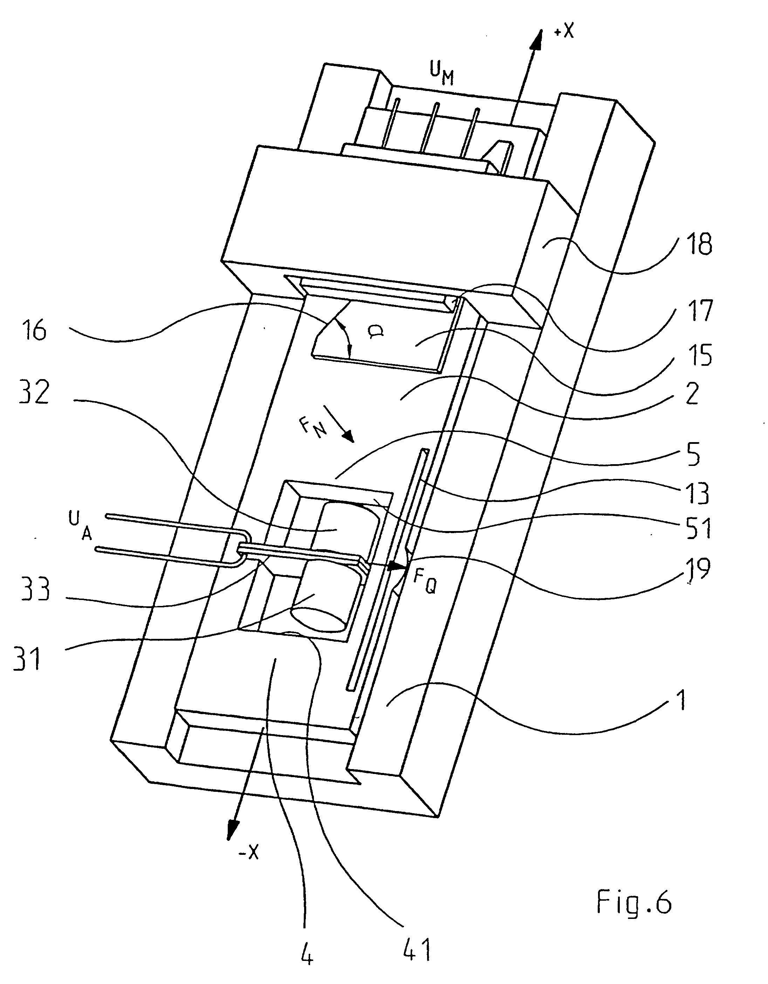

Figur 6 zeigt eine weitere Ausführungsform einer erfindungsgemäßem Positionieranordnung mit einem Reflexionslichtschrankenwegmeßsystem. Zusätzlich zu der in Fig. 1 dargestellten Ausführungsform ist auf der Unterlage 1 eine Brücke 18 mit einer Reflexionslichtschranke 17 angebracht. An dem Objekt 2 ist ein Reflektor 15 mit einer schrägen Kante 16 befestigt. Mit dieser Meßanordnung ist eine Messung der Relativbewegung zwischen dem Objekt 6 und der Unterlage 7 möglich. Durch Veränderung des Winkels a der schrägen Kante 16 können unterschiedliche Meßbereiche des Reflektionslichtschrankenmeßsystems erzielt werden. Zur Linearisierung der Lichtschrankenkennlinie und Erhöhung der Empfindlichkeit kann unterhalb des Objektes 2 ein weiterer, nicht dargestellter Reflektor mit entgegengesetzt schräger Kante und eine zweite Reflexionslichtschranke angeordnet sein. Durch diese Anordnung erfährt das Meßsignal U_{M1} der einen Lichtschranke eine Zunahme und das Meßsignal U_{M2} der anderen Lichtschranke eine Abnahme des Spannungspuls bei einer Verschiebung des Objektes 2. Die Differenzkennlinie wird linearisiert, die Empfindlichkeit verdoppelt, Temperaturabhängigkeit und Drift werden zumindest teilweise kompensiert. Zur Messung der Relativbewegung zwischen dem Objekt 2 und der Unterlage 1 können aber auch andere, im optischen Präzisionsgerätebau übliche Meßsysteme eingesetzt werden, die eine Positionierung zwischen dem Objekt 2 und der Unterlage 1 anzeigen, wie z. B. numerische Meßsysteme oder Hallsondenwegmeßsysteme. Die Verbindung zwischen dem Ausgang UM der Meßanordnung und der Auswerteelektronik ist nicht dargestellt.

Fig. 7 zeigt eine Ausführungsform eines Multimorphs der erfindungsgemäßen Positionieranordnung. Der Multimorph besteht aus einer Anzahl von rechtspolarisierten Piezofolien 20 und linkspolarisierten Piezofolien 21. Die rechtspolarisierten Folien 20 sind mit den linkspolarisierten Folien 21 wechselseitig aneinander angeordnet. Die rechtspolarisierten Piezofolien 20 und die linkspolarisierten Piezofolien 21 bilden je einen linken Folienstapel 26 und einen rechten Folienstapel 27. Zwischen diesem linken und rechten Folienstapel 26 und 27 ist eine Isolierfolie 22 angeordnet. Die rechtspolarisierten Piezofolien 20, die linkspolarisierten Piezofolien 21 und die Isolierfolie 22 weisen Elektroden zur Erzeugung eines elektrischen Feldes auf. Wie allgemein bekannt, erfolgt eine Ausdehnung der Folie senkrecht zur Stapelhöhe, wenn das elektrische Feld und die Polarisierung gleichgerichtet sind. Sind Polarisierung und elektrisches Feld entgegengesetzt, so kontraktiert die Folie. Um eine Kontraktion bzw. Dehnung des Folienstapels mit Anlegen einer elektrischen Aktorspannung U_{A} erzielen zu können, weisen in dem linken Folienstapel 26 und dem rechten Folienstapel 27 die benachbarten Piezofolien stets eine antiparallele piezoelektrische Polarisierung auf. Auf den rechtspolarisierten Piezofolien 20, den linkspolarisierten Piezofolien 21 und der Isolierfolie 22 sind die Elektroden nach in der Elektrotechnik üblichen Beschichtungsverfahren aufgebracht. So ein Multimorph ist z. B. von der Fa. Marco unter der Bezeichnung pa/b/m 1/20/5 zu beziehen. Der dargestellte Multimorph mit einer Länge von 20 mm und einer Stapeldicke von ca. 1 mm weist bei einer Aktorspannung U_{A} von ca. 20 V eine statische Auslenkung von > 0,2 mm und eine Resonanzfrequenz von 1 kHz auf.

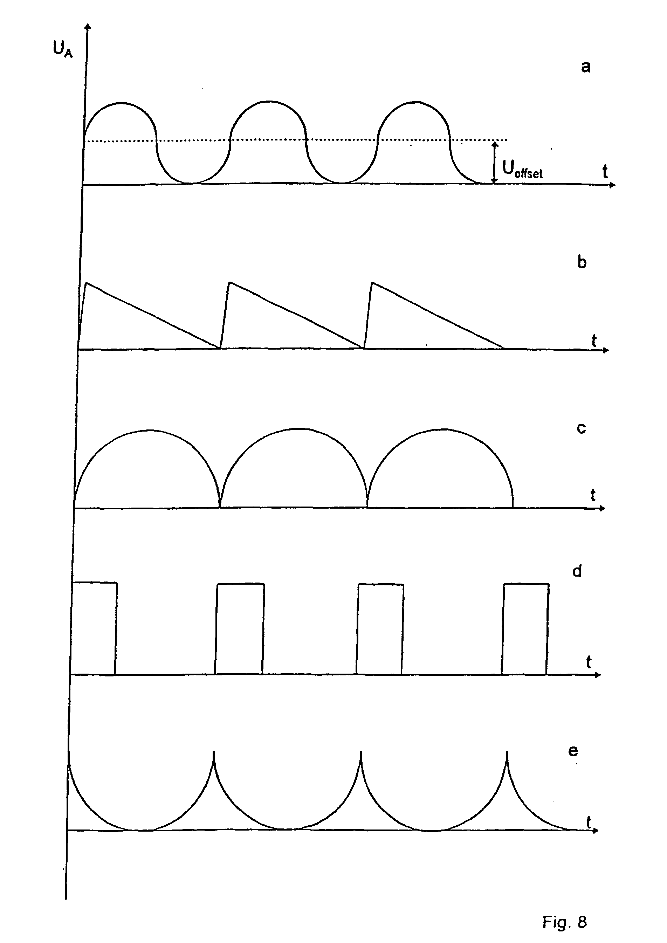

In Fig. 8 ist der zeitliche Verlauf verschiedener Spannungsimpulse U_{A} dargestellt. die am piezoelektrischen Element 33 der Fig. 1 anliegen. Mit diesen Spannungsimpulsen können vorteilhaft resonanzähnliche Schwingungen des Piezoelementes 3, hohe Wirkungsgrade der Stellschritte und hohe Frequenzen der mechanischen Stellimpulse erzielt werden. Es stellen in Fig. 8 dar:
a) eine durch eine Offsetgleichspannung U_{offset} verschobene Sinusspannung;
b) sägezahnförmige Spannungsimpulse;
c) gleichgerichtete sinusförmige Spannungsimpulse;
d) rechteckförmige Spannungsimpulse;
e) parabelförmige Spannungsimpulse.

Die Spannungsimpulse bewirken eine einseitig gerichtete resonanzähnliche periodische Auslenkung des Piezoelementes 3 und eine Schrittbewegung des Objektes 2 in dieser Richtung. Die Invertierung der Spannungsimpulse U_{A} bewirkt eine Richtungsumkehr der translatorischen Bewegung des Objektes 2 zur Unterlage 1.

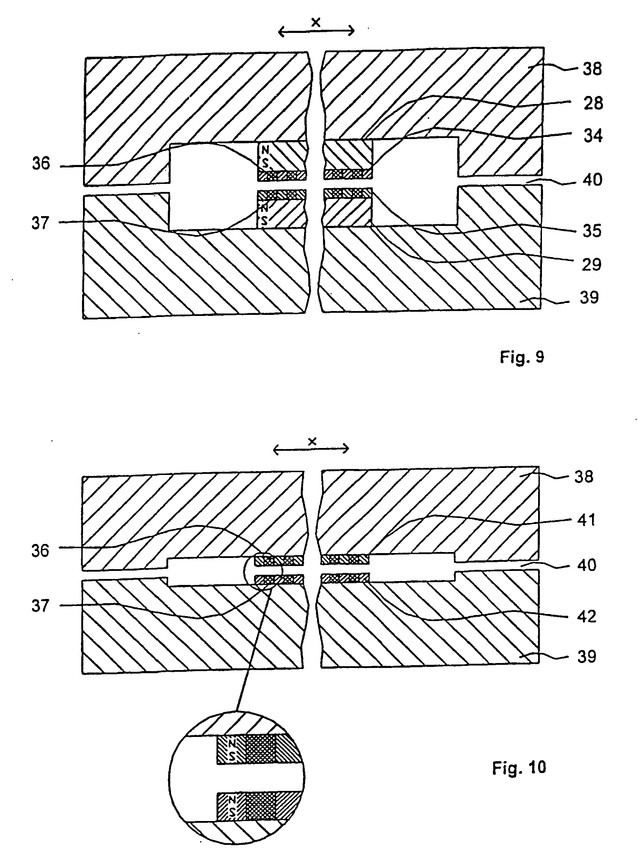

In Figur 9 und 10 sind zwei Anordnungen mit magnetischen Gitterstrukturen dargestellt, mit denen inkrementelle Stellschritte von z. B. genau 1 µm Schrittweite pro mechanischem Impuls erzielt werden, so daß kein Wegmeßsystem benötigt wird.

In Fig. 9 sind zwei ebene kunststoffgebundene NdFeB-Magnetschichten 28 und 29 von z. B. jeweils 20 µm Dicke und Bᵣ = 0,6 T Remanenz jeweils von 1 µm dicken, strukturierten weichmagnetischen Gitterschichten 34 und 35 bedeckt, die eine Gitterkonstante von 1 µm aufweisen. Die Gitterzwischenräume 36 und 37 der weichmagnetischen Gitter 34 und 35 sind mit einem unmagnetischen Material, z. B. Kunststoff. ausgefüllt, um ein mechanisches Verhaken der Gitterstrukturen beim Stellschritt zu vermeiden. Der magnetische Rückschluß wird durch weichmagnetische Gitterträger 38 und 39 gebildet, die entweder das Objekt 2 und die Unterlage 1 bilden oder mit diesen fest verbunden sind. Die Trennfuge 40 zwischen den weichmagnetischen Rückschlüssen 38 und 39 und den weichmagnetischen Gittern 34 und 35 weist gute Gleiteigenschaften auf und besteht z. B. aus dünnen Teflonschichten. Die Strukturierung der weichmagnetischen Schichten 34 und 35 kann durch maskiertes Ionenätzen oder herkömmliche photolithographische Ätzprozesse erfolgen.

Der Magnetfluß wird außerhalb der Magnetschichten 28 und 29 in den weichmagnetischen Gittern 34 und 35 und in den weichmagnetischen Gitterträgem 38 und 39 durch die hohe magnetische Permeabilität µᵣ > 1000 sehr gut geführt und gebündelt und bewirkt magnetische Anziehungskräfte in der Trennfuge 40 von etwa 36x10³ N/m², wenn die weichmagnetischen Gitter 34 und 35 deckungsgleich übereinander liegen. In den unmagnetischen Gitterzwischenräumen 36 und 37 sind wegen µᵣ = 1 nur geringe magnetische Streufelder und nur geringe magnetische Anziehungskräfte wirksam. Bei Verschiebung eines der Gitter in x-Richtung parallel zur Trennfuge 40 entsteht deshalb eine zum Gitter ortsabhängige Modulation der magnetischen Anziehungskräfte F_{N} von ca. 50 % und ein Rasteffekt von z. B. 1 µm durch wechselseitige magnetische Anziehungskräfte in x-Richtung.

Der Vorteil dieser Anordnung besteht in der Verwendung handelsüblicher, relativ dicker Magnetschichten 28 und 29, die nicht strukturiert zu werden brauchen. Die dünnen weichmagnetischen Schichten 34 und 35 können durch maskiertes lonenätzen und herkömmliche Lithographieverfahren strukturiert werden. Ein besonders einfacher magnetischer Rastmechanismus ist dadurch erzielbar, daß die bei inkrementellen Längenmeßsystemen üblichen weichmagnetischen Meßbänder auf einer Seite mit einer relativ dicken dauermagnetischen Schicht versehen werden und auf der anderen Seite eine geätzte Struktur mit z. B. 1 µm Gitterkonstante aufweisen.

In Fig. 10 befinden sich auf den weichmagnetischen Gitterträgern 38 und 39 z. B. ca. 1 µm dicke Magnetgitter (gitterförmige NdFeB-Magnetschichten) 41 und 42 mit Gitterkonstanten von 1 µm. Sie weisen eine Remanenz von Bᵣ = 1,2 T auf. Der Magnetfluß zwischen den magnetischen Gitterstrukturen 41 und 42 bewirkt in der Trennfuge 40 Anziehungskräfte von ca. 140x10³ N/m², wenn die Magnetgitter 41 und 42 deckungsgleich übereinander liegen. Bei Verschiebung der Magnetgitter 41 und 42 parallel zur Trennfuge 40 entsteht auch hier eine ortsabhängige Modulation der magnetischen Anziehungskräfte von ca. 50 % und ein Rasteffekt aller 1 µm durch periodische Tangentialkräfte. Das Aufbringen der Magnetgitter 41 und 42 erfolgt z. B. durch Sputtern und die Strukturierung z. B. durch maskiertes lonenätzen, herkömmliche Lithographieprozesse oder durch Ritzen mit einem Diamanten auf einer Gitterteilmaschine. Die unmagnetischen Gitterzwischenräume 36 und 37 der strukturierten Magnetgitter 41 und 42 sind ebenfalls mit einem unmagnetischen Material, z. B. Kunststoff, ausgefüllt, um ein mechanisches Verhaken der Gitterstrukturen beim Stellschritt zu vermeiden. Die Trennfuge 40 zwischen den weichmagnetischen Gitterträgern 38 und 39 und den Magnetgittem 41 und 42 weist gute Gleiteigenschaften auf und besteht ebenfalls z. B. aus dünnen Teflonschichten.

Der Vorteil dieser Anordnung besteht in der Verwendung zwar sehr dünner aber reiner NdFeB-Schichten mit hoher Remanenz Bᵣ und größeren magnetischen Anziehungskräften als bei der Anordnung nach Fig. 9 mit kunststoffgebundenen Magnetschichten. Die leicht korrodierenden NdFeB-Magnetschichten müssen z. B. durch eine Aluminiumoxidbeschichtung geschützt werden. In einem weiteren nicht dargestellten Ausführungsbeispiel, sind ca. 1 µm dicke und ebene Magnetschichten auf den weichmagnetischen Gitterträgern 38 und 39 aufgetragen und mit einer Polteilung von 1 µm aufmagnetisiert. Der Vorteil dieser Anordnung besteht darin, daß die Oberfläche der Magnetschicht unverändert bleibt.

Die erfindungsgemäße Anordnung nach Fig. 1 weist den Vorteil auf, daß ein einfaches kostengünstiges piezoelektrisches Element 33 und eine einfache kostengünstige elektronische Impulsschaltung den Impulsantrieb bewirken. Ein weiterer Vorteil besteht darin, daß die Bewegung der geführten Stößel 31 und 32 nicht durch Reibkräfte beeinflußt wird. Die Stellschritte des Objektes 2 nach jedem mechanischen Impuls sind hierdurch besonders konstant. Die flach gestaltbaren Elemente des Objektes 2 mit Federelement 13 und der Unterlage 1 lassen sich auch bei niedrigen Stückzahlen produktiv durch Laserschneiden oder Ätzen aus Materialien wie Stahl, Federbronze, Aluminium oder anderen herstellen. Die Anordnung nach Fig. 1 kann sowohl mit einem Wegmeßsystem, wie in Fig. 6, als auch mit Positionierungsgittem zur Erzielung eines Rasteffektes, wie in Fig. 1, ausgerüstet werden.

### Bezugszeichen

- Unterlage: 1
- Objekt: 2
- Piezoelement: 3
- Anschlagblöcke: 4, 5
- Anschlagflächen: 41, 51
- Piezomaterialien: 6, 7
- Ansteuereinheit: 8
- Gitterstrukturen: 9
- Meßeinrichtung: 10
- Auswerteelektronik: 11
- Führungsschiene: 12
- Schiene des Objektes: 14
- Federelement: 13
- Reflektor: 15
- schräge Kante: 16
- Reflexionslichtschranke: 17
- Brücke: 18
- Federanschlag: 19
- rechtspolarisierte Piezofolie: 20
- linkspolarisierte Piezofolie: 21
- Isolierfolie: 22
- Elektrode der Piezofolie: 23, 24
- Polarisierungsrichtungen der Piezofoilie: 25
- linker Folienstapel: 26
- rechter Folienstapel: 27
- Stößel: 31, 32
- Bimorph: 33
- weichmagnetische Gitter: 34, 35
- unmagnetische Gitterzwischenräume: 36, 37
- weichmagnetische Gitterträger: 38, 39
- Trennfuge: 40
- Magnetgitter: 41. 42
- Riefen: A
- magnetische Gitterstrukturen: B
- elektronische Gitterstrukturen: C
- Flüssigkeitsstrukturen: D
- elektrische Pole: E, F
- Federkraft: F_{Q}
- Normalkraft: F_{N}
- Gitterkonstante der höhenmodulierten Gitterstruktur: a
- der magnetischen Gitterstruktur: b
- der elektrostatischen Gitterstruktur: c
- der hydrophob/hydrophilen Gitterstruktur: d
- Aktorspannung: U_{A}
- Meßspannung: UM
- Gleichspannung: U_{offset}
- Rechteckspannung: Uₚᵤₗₛₑ
- Dielektrizitätskonstante: Er

## Patentansprüche

1. Anordnung zum Positionieren eines auf einer Unterlage (1) verschiebbaren Objektes (2) relativ zu dieser mittels eines mit einer Ansteuereinheit (8) ansteuerbaren Piezoelementes (3), **dadurch gekennzeichnet, daß** das Verschieben des Objektes (2) auf der Unterlage (1) durch hammerartige Schläge des Piezoelementes (3) auf eine in einem vorgegebenen Abstand zu diesem angeordnete Anschlagfläche (41) eines Anschlagblockes (4) erfolgt, wobei Piezoelement (3) und Anschlagblock (4) am Objekt (2) befestigt sind und am Objekt (2) ein Federelement (13) vorgesehen ist, mittels dessen eine Andruckkraft (F_{Q}) zwischen Objekt (2) und Unterlage (1) zur Ausführung reibkraftbegrenzter Stellschritte erzeugt wird.

2. Anordnung nach Anspruch 1, **dadurch gekennzeichnet, daß** das Piezoelement (3) ein Multilayer ist, der aus mindestens zwei Schichten von Piezomaterialien (6, 7) aufgebaut ist.

3. Anordnung nach Anspruch 1 oder 2, **dadurch gekennzeichnet, daß** ein weiterer mit dem Objekt (2) verbundener Anschlagblock (5) mit einer Anschlagfläche (51) vorgesehen ist.

4. Anordnung nach Anspruch 3, **dadurch gekennzeichnet, daß** die Anschlagfläche des weiteren Anschlagblocks (5) so angeordnet ist, daß durch hammerartige Schläge auf sie das Objekt (2) in einer Richtung entgegengesetzt der Richtung bewegt wird, in die es durch die hammerartigen Schläge auf den anderen Anschlagblock (4) bewegt wird.

5. Anordnung nach einem der Ansprüche 1 bis 4, **dadurch gekennzeichnet, daß** die Anschlagflächen (41, 51) in einem gleich großen Abstand vom zugeordneten Ende des Piezoelementes (3) in Ruhestellung entfernt, angeordnet sind.

6. Anordnung nach Anspruch 4, **dadurch gekennzeichnet, daß** das Piezoelement (3) wahlweise zur Ausführung hammerartiger Schläge auf die Anschlagfläche entweder des einen oder des weiteren Anschlagblocks (4; 5) einstellbar ist.

7. Anordnung nach einem der Ansprüche 1 bis 6, **dadurch gekennzeichnet, daß** dem Piezoelement (3) eine Ansteuereinheit (8) zugeordnet ist, mit der die Anschlagstärke des Piezoelementes (3) gegen die Anschlagfläche (41; 51) einstellbar sind.

8. Anordnung nach einem der Ansprüche 1 bis 7, **dadurch gekennzeichnet, daß** zur Ausführung schrittartige Relativbewegungen zwischen Objekt (2) und Unterlage (1) auf den einander zugewandten Seiten derselben (2; 1) parallele, senkrecht zur Bewegungsrichtung verlaufende, zueinander komplementär ausgebildete höhenmodulierte und/oder magnetische und/oder elektrostatische und/oder hydrophob/hydrophile Gitterstrukturen angebracht sind.

9. Verwendung einer Anordnung nach mindestens einem der vorhergehenden Ansprüche zur Positionierung eines Objektes relativ zum Meßbereich bei einer mikroskopischen Einrichtung.

10. Verwendung einer Anordnung nach einem der Ansprüche 1 bis 8 zur Positionierung eines Meßkopfes relativ zu einer Meßstrecke oder umgekehrt.

## Claims

1. Arrangement for positioning an object (2) relative to a base (1), on which the object (2) is displaceable, by means of a piezo element (3) which is controllable by a control unit (8), **characterized in that** the displacement of the object (2) on the base (1) is carried out by means of hammerlike blows of the piezo element (3) on a striking face (41) of a striking block (4), said striking face (41) being arranged at a predetermined distance to the piezo element (3), wherein the piezo element (3) and the striking block (4) are attached to the object (2), and a spring element (13) is provided on the object (2), by means of which a contact pressure force (F_{Q}) is generated between the object (2) and the base (1) to carry out adjusting steps limited by a friction force.

2. Arrangement according to claim 1, **characterized in that** the piezo element (3) is multilayered and is formed of at least two layers of piezo materials (6, 7).

3. Arrangement according to claim 1 or 2, **characterized in that** an additional striking block (5) which has a striking face (51) and is connected with the object (2) is provided.

4. Arrangement according to claim 3, **characterized in that** the striking face of the additional striking block (5) is arranged in such a way that, as a result of hammerlike blows on this striking face, the object (2) is moved in a direction opposite to the direction in which it is moved toward the other striking block (4) by the hammerlike blows.

5. Arrangement according to one of claims 1 to 4, **characterized in that** the striking faces (41, 51) are arranged at an equal distance to the associated ends of the piezo element (3) in the resting position.

6. Arrangement according to claim 4, **characterized in that** the piezo element (3) is adjustable selectably for carrying out the hammerlike blows on the striking face of the one or the additional striking block (4; 5).

7. Arrangement according to one of claims 1 to 6, **characterized in that** a control unit (8) is associated with the piezo element (3) by means of which the striking strength of the piezo element (3) against the striking face (41; 51) is adjustable.

8. Arrangement according to one of claims 1 to 7, **characterized in that** parallel, mutually complementing, height-modulated grid structures extending vertical to the movement direction and/or magnetic and/or electrostatic and/or hydrophobic/hydrophilic grid structures are arranged on the sides of the object (2) and base (1) which face one another for implementing stepwise relative movements between the object (2) and the base (1).

9. Use of an arrangement according to at least one of the preceding claims for positioning an object relative to the measurement area in a microscope device.

10. Use of an arrangement according to one of claims 1 to 8 for positioning a measurement head relative to a measurement section, or vice versa.

## Revendications

1. Dispositif de positionnement d'un objet (2), pouvant coulisser sur un support (1) par rapport à celui-ci, au moyen d'un piézoélément (3) pouvant être commandé au moyen d'une unité de commande (8), **caractérisé en ce que** le coulissement de l'objet (2) sur le support (1) s'effectue par des coups constituant un martellement du piézoélément (3) sur une surface de butée (41), disposée à une distance prédéfinie de celui-ci, d'un bloc de butée (4), le piézoélément (3) et le bloc de butée (4) étant fixés à l'objet (2), et sur l'objet (2) étant prévu un élément à ressort (13) au moyen duquel on produit une force de pression (F_{Q}) entre l'objet (2) et le support (1), pour exécuter des pas de réglage à force de friction limitée.

2. Dispositif selon la revendication 1, **caractérisé en ce que** le piézoélément (3) est un élément multicouche qui est constitué d'au moins deux couches de piézomatériau (6, 7).

3. Dispositif selon la revendication 1 ou 2, **caractérisé en ce qu'**un autre bloc de butée (5), relié à l'objet (2), est prévu avec une surface de butée (51).

4. Dispositif selon la revendication 3, **caractérisé en ce que** la surface de butée de l'autre bloc de butée (5) est disposée de manière que par des coups de martellement sur celle-ci, l'objet (2) est déplacé dans un sens opposé au sens dans lequel il est déplacé par les coups de marteau sur l'autre bloc de butée (4).

5. Dispositif selon l'une des revendications 1 à 4, **caractérisé en ce que** les surfaces de butée (41, 51) sont disposées à une même distance de l'extrémité associée du piézoélément (3) en position de repos.

6. Dispositif selon la revendication 4, **caractérisé en ce que** le piézoélément (3) est réglable en option pour appliquer des coups de marteau sur la surface de butée de l'un ou de l'autre bloc de butée (4 ; 5).

7. Dispositif selon l'une des revendications 1 à 6, **caractérisé en ce qu'**au piézoélément (3) est associée une unité de commande (8) au moyen de laquelle on peut régler l'intensité de la butée du piézoélément (3) contre la surface de butée (41 ; 51).

8. Dispositif selon l'une des revendications 1 à 7, **caractérisé en ce que** pour exécuter des mouvements relatifs de type pas entre l'objet (2) et le support (1) il est réalisé, sur les faces tournées l'une vers l'autre de ceux-ci (2 ;1), des structures en grille parallèles, s'étendant perpendiculairement à la direction de déplacement, réalisées complémentaires les unes des autres, modulées en hauteur et/ou magnétiques et/ou électrostatiques et/ou hydrophobes/hydrophiles.

9. Utilisation d'un dispositif selon l'un au moins des revendications précédentes pour positionner un objet par rapport à la zone de mesure dans un dispositif microscopique.

10. Utilisation d'un dispositif selon l'une des revendications 1 à 8 pour positionner une tête de mesure par rapport à un parcours de mesure ou inversement.
